# EUROPEAN PATENT SPECIFICATION

(11) **EP 0 304 577 B1**
(45) Date of publication and mention of the grant of the patent: **20.04.1994**
(21) Application number: 88109850.3
(22) Date of filing: 18.07.1985
(51) Int. Cl.: F16F 15/12, F16D 13/70

(54) **Torque variation absorbing device**
Torsionsschwankungen aufnehmende Vorrichtung
Dispositif d'amortissement des variations du couple

(30) Priority: 19.07.1984 JP 108288/84 U; 19.07.1984 JP 108289/84 U; 19.07.1984 JP 108290/84 U
(43) Date of publication of application: 01.03.1989
(62) Divisional of application: 85109005.0
(73) Proprietor: AISIN SEIKI KABUSHIKI KAISHA, Kariya City Aichi Pref. (JP); TOYOTA JIDOSHA KABUSHIKI KAISHA, Aichi-ken 471 (JP)
(72) Inventor: Aiki, Shigetaka, Karya-shi Aichi-ken, 448 (JP); Kobayashi, Kiyonori, Chiryu-shi Aichi-ken, 472 (JP); Kato, Satoshi, Anjo-shi Aichi-ken, 444-12 (JP)
(74) Representative: Grams, Klaus Dieter, Dipl.-Ing.

(56) References cited:
- DE-A- 2 926 012
- DE-A- 2 931 423
- FR-A- 2 529 982
- GB-A- 2 000 257
- AUTOMOTIVE ENGINEERING, vol. 93, no. 1, January 1985, page 85, Dallas, Texas, US; J. YAMAGUCHI: "Flywheel damper reduces low speed diesel noise and vibrations"
- PATENT ABSTRACTS OF JAPAN, vol. 4, no. 53 (M-8)[535], 19th April 1980; & JP-A-55 20 930 (AISHIN SEIKI K.K.) 14-02-1980

## Description

The present invention relates to a torque variation absorbing device for an engine as defined by the preamble of claim 1.

An engine for an automobile or an aircraft is equipped with a torque variation absorbing device for power transmission.

The prior art offers such a torque variation absorbing device as disclosed, for instance, in JP-A-55-020930. Referring to Fig. 7, such a known generic device of the prior art has two inertia members, i.e., a driving plate 101 which is rotatably connected to a crankshaft of an engine and a flywheel 102 which is connected to the follower means and is rotatable with respect to the driving plate. Between the driving plate 101 and the flywheel 102, a spring mechanism 103 and a torque limiting mechanism 104 are installed. In this device rotation of the crankshaft is transmitted to the flywheel 102 through the driving plate 101, the spring mechanism 103 and the torque limiting mechanism 104. Thus, the torque variation is absorbed by the vibrational system of these members. An oil drain hole 105 is provided at the inner portion of the flywheel 102. The hole 105 serves to drain the grease or oil 108 splashing from the clutch spline 106 and prevents the oil from reaching a clutch friction surface 107.

However, in the above-mentioned device, the torque limiting mechanism 104 is located radially outside the spring mechanism 103. Since the torque limiting mechanism 104 includes linings of light material and reduces the inertial mass of the driving plate 101, location of the torque limiting mechanism 104 outside the spring mechanism 103 requires an increase in the diameter and axial thickness of the driving plate 101 to obtain a necessary inertial mass and, as a result, increases the size of the torque variation absorbing device. Further, since the spring mechanism 103 including a circumferentially extending coil spring and spring seats located at both ends of the coil spring are pushed against the radially inner surface of the torque limiting mechanism 104 when the spring mechanism 103 receives a centrifugal force during rotation of the device, the spring mechanism 103 mainly contacts the radially inner surfaces of driven disks of the torque limiting mechanism 104 which have a smaller surface area than that of an integral cylindrical surface. As a result, the coil spring of the spring mechanism 103 is easily injured due to the local and severe abrasion with the driven disks and the spring seats of the spring mechanism is likely to occur a thermal distortion due to the severe abrasion. Furthermore, location of the torque limiting mechanism 104 outside the spring mechanism 103 increases the amount of slippage and dusts from the linings of abrasive material of the torque limiting mechanism 104 for the same relative rotational angle when the mechanism 104 causes slippage and obstructs a free escape of the dusts of abrasive material from the space where the mechanism 104 is housed. The dusts collecting in the torque limiting mechanism 104 will deteriorate the operation of the mechanism 104.

Besides, the driving plate 101 of the device is made from a machined casting which is likely to include blowholes. Therefore, the plate must be made thick in order to maintain the structural strength of the plate. As a result, the driving plate 101 is thick in the axial direction of the device and it was difficult to make the device compact.

Further, in the above-mentioned device there is a straight gap 109 extending radially between the driving plate 101 and the flywheel 102. Therefore, the spring mechanism 103 and the torque limiting mechanism 104 are open outwardly. On account of this layout, foreign substances such as a wood chip can invade through the gap as the device is being transported or assembled and cause the performance of the device, and in the worst case, even its durability to deteriorate.

An essential object of the present invention is to provide a torque variation absorbing device with a spring mechanism and a torque limiting mechanism, which is compact in size in comparison with a conventional one, the spring mechanism of which is unlikely to suffer from an abrasive damage and a thermal distortion, and in which dusts produced from the torque limiting mechanism can easily escape thereby increasing the operational reliability of the device.

Another, subsidiary object of the present invention is to decrease the thickness of the driving plate in the axial direction by modifying its structure so that the size of the device is further reduced. In this instance, such a reduction of the size of device has to be accomplished without causing any reduction of strength.

Yet another, subsidiary object of the present invention is to prevent foreign substances from invading the device through the peripheral opening of the gap between the driving plate and the flywheel.

To accomplish the above-mentioned objects, the torque variation absorbing device of the present invention as defined by claim 1 provides inertia members comprising a driving plate coupled to the driving shaft and a flywheel coaxially and rotatably supported on the driving plate. Between the driving plate and the flywheel there are interposed a spring mechanism and a torque limiting mechanism. In the device, the slidable part of the torque limiting mechanism is located radially inside the spring mechanism.

Preferably, the driving plate comprises a pair of side plates fabricated of steel.

Preferably, the driving plate is provided with a cylindrical projection surrounding the flywheel from the outside.

Yet preferably, the load support points on both sides of one of the steel side plates in the axial direction are staggered in the radial direction of the steel side plate.

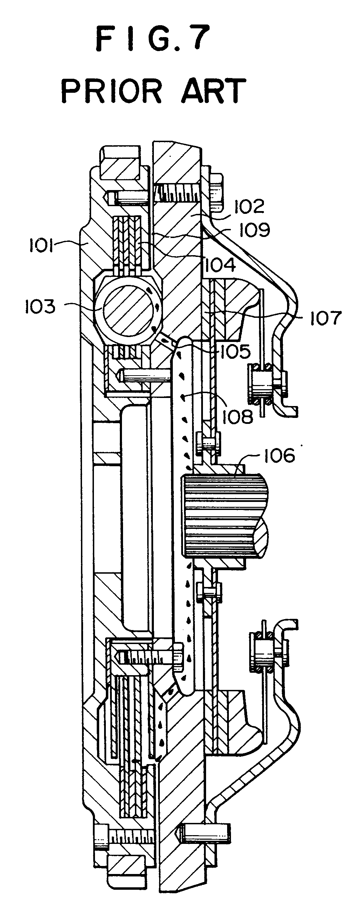

In this layout of the device, since the torque limiting mechanism is located radially inside of the spring mechanism, the inertial mass of the driving plate is increased in comparison with that of the device of Figure 7 and, as a result, the size of the device can be made smaller than that of the conventional device of Figure 7. Further, when the spring mechanism receives a centrifugal force during rotation of the device, the spring mechanism is not pushed against the radially inner surface of the torque limiting mechanism but is pushed against a radially opposing integral cylindrical surface, the contact surface area is increased and, as a result, an abrasive damage and a thermal distortion of the spring mechanism is unlikely to occur. Furthermore, dusts produced from the torque limiting mechanism can escape from the the torque limiting mechanism toward the spring mechanism.

When the driving plate comprises a pair of side plates of steel, the driving plate can be made thin without being accompanied with reduction of strength and the size of the device can be made smaller.

The side plate will receive a bending moment when the device is tilted with respect to the crankshaft and large bending stress may develop in the side plate on account of its thin fabrication. Nevertheless, the stress amplitude will be small and an increased strength of the side plate will be secured, when the load support points on both sides of the side plate are staggered in the radial direction.

Furthermore, when the cylindrical projection is formed with the driving plate, because the cylindrical projection of the driving plate serves to prevent invasion of foreign substances into the spring mechanism and the torque limiting mechanism of the device, there is significantly less likelihood that the performance characteristics and the durability of the device might deteriorate through obstruction from foreign substances.

These and other objects and advantages of the present invention will become more apparent and more readily appreciated from the following detailed description of the preferred exemplary embodiments of the invention taken in conjunction with the accompanying drawings, wherein:
Figure 1 is a sectional view taken along I - I in Fig. 2 of a torque variation absorbing device constructed in accordance with a preferred embodiment of the present invention;
Figure 2 is a partially sectional, elevation view showing an internal construction of the device of Fig. 1;
Figure 3 is a partial sectional view showing the part III of the device of Fig. 1;
Figure 4 is a partial sectional view showing the part IV of a hysteresis mechanism of the device of Fig. 1;
Figure 5 is a diagram showing a torque transmission characteristic of the device of Fig. 1;
Figure 6 is a diagram showing the variation of stress developed in the side plate of the device of Fig. 1; and
Figure 7 is a sectional view of a conventional torque variation absorbing device.

A torque variation absorbing device constructed in accordance with a preferred embodiment of the present invention will be described with reference to the drawings.

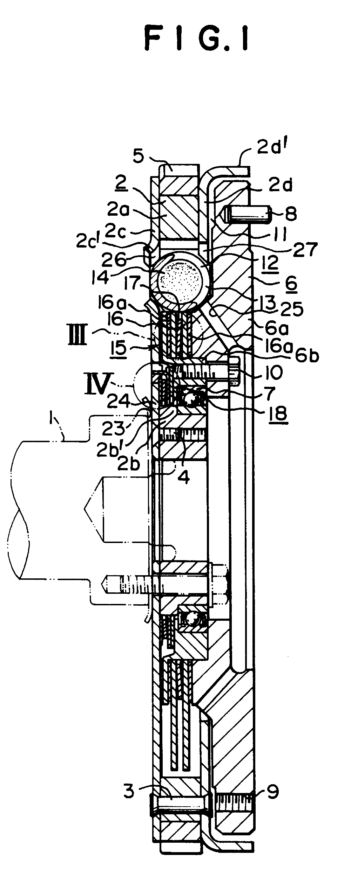

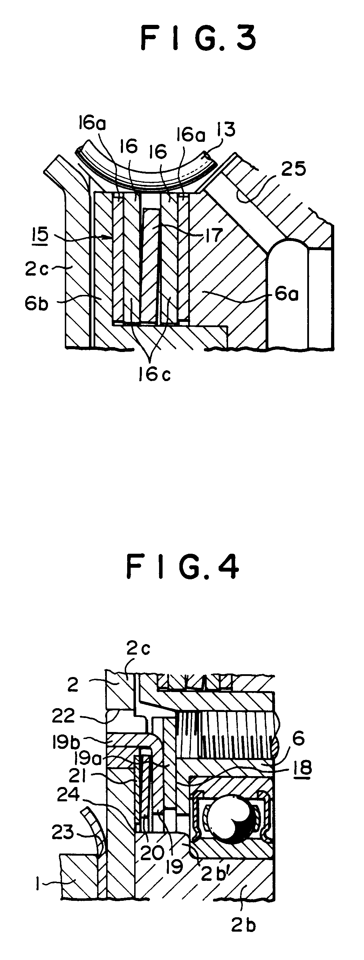

In Figs. 1 and 4, a driving plate 2 is connected to a driving shaft 1 of an engine crankshaft, and the driving plate 2 and the driving shaft 1 rotate together. The driving plate 2 comprises an outer body 2a shaped like a ring, an inner body 2b shaped like a ring, and steel side plates 2c and 2d which clamp the outer body 2a from both sides by a rivet 3. The inner body 2b is connected to the side plate 2c located on the driving shaft side by a screw 4. On the periphery of the outer body 2a is press-fitted or shrink-fitted a ring gear 5 for accommodating the starting of an engine. The outer body and the ring gear may be integrated. On the periphery of the inner body 2b, a projection 2b′ is formed jutting outwardly in the radial direction on the side of side plate 2c which faces a driving shaft 1 of crankshaft. Thus the periphery of the body 2b and the projection 2b′ together constitute a bearing guide for fitting a bearing 7. The projection 2b′ receives a thrust force from the bearing 7 and thereby prevents the thrust force from acting on the side plate 2c. Steel fabrication of the side plate 2c and the reception of the thrust force by the projection 2b′ allow the side plate 2c to be constructed thin. The side plate 2c has an opening 26 with a rim 2c′ and the side plate 2d has a recess 27 opening radially inward. The rim 2c′ of the opening 26 is bent outwardly in the axial direction and a spring mechanism 12 (vibration damping mechanism by a spring) discussed later is housed in the opening 26 and the recess 27. The rim 2c′ of the opening 26 and the recess 27 can be easily press-formed. Thus, the side plate 2c of the driving plate 2 is squeezed between the driving shaft 1 and the inner body 2b which functions as a bearing guide. The radially outside end portion 23 of the driving shaft 1 and the radially outside end portion 24 of the inner body 2b are the load supporting points for the side plate 2c when the torque variation absorbing device tilts with respect to the axis of the driving shaft 1. The load supporting points 23 and 24 are radially staggered and the radially outside end portion 24 of the inner body 2b is located radially outside than the radially outside end portion 23 of the driving shaft 1.

The side plate 2d which constitutes one part of the driving plate 2 and which is located close to the flywheel 6 has its periphery 2d′ bent in the L-letter fashion to surround the flywheel 6. The axially extending annular projection 2d′ of the bent portion covers a gap 11 which extends straight in the radial direction between the driving plate 2 and the flywheel 6.

Parallel to the driving plate 2 and coaxial with the driving plate 2, the flywheel 6 is installed rotatably with respect to the driving plate 2 and it is supported rotatably by the driving plate 2 by means of the bearing 7. A clutch-positioning pin 8 is provided for positioning a clutch (not shown) and a screw hole 9 is formed for fitting the clutch cover (not shown). The flywheel 6 is divided into a flywheel body 6a and a driven plate 6b so that it can house a torque limiting mechanism 15 which will be described later. The flywheel body 6a and the driven plate 6b are connected together by means of a bolt 10. The flywheel body 6a has a plurality of oil drain holes 25 extending therethrough toward the spring mechanism 12 which will be described later. The oil drain holes 25 serve to prevent an oil or grease splashing from a clutch spline, etc. (not shown) from reaching the clutch surface of the flywheel 6.

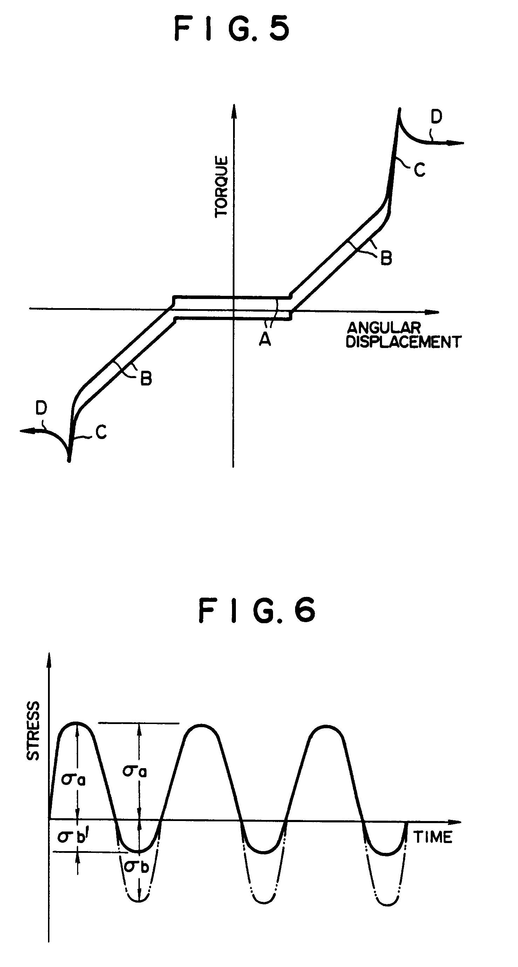

A spring mechanism 12 is provided between the driving plate 2 and the flywheel 6. The spring mechanism 12 comprises a coil spring 13 extending in the circumferential direction and spring seats 14 provided at both ends of the coil spring 13. The spring seat 14 is constructed of a hard synthetic resin except a portion 14a, and the portion 14a is constructed of rubber and is deformable with a greater spring constant than the spring 13. The spring seats 14 at both ends of the coil spring 13 are identical in shape, and one spring seat 14 is opposed to and can detachably contact the rim 2c′ of the opening 26 and a rim of the recess 27 formed in the side plates 2c and 2d, respectively, while the other spring seat 14 is opposed to and can detachably contact a radial extension 16b of a driven disk 16. A radially inner, annular portion 16c of the driven disk 16 constitutes one element of the torque limiting mechanism 15 which will be described later. When no torque is acting, there is a gap between at least one of the spring seats 14 and at least one of the side plates 2c and 2d and the radial extension of the driven disk 16b which the seat 14 is able to contact, thereby producing a torque-free characteristic A of Fig. 5. The characteristic A, however, has hysteresis on account of a hysteresis mechanism 18 which will be described later. The characteristic B in Fig. 5 is produced on account of a deformation of the spring 13 and the characteristic C is produced on account of a deformation of the deformable portion 14a of the spring seat 14 when the spring 13 is compressed to make the two deformable portions 14a contact each other.

As seen from Fig. 1, the torque limiting mechanism 15 is located radially inside the spring mechanism 12. The slidable part of the torque limiting mechanism 15 is located radially inside the open end, on the side of the spring mechanism 12, of the oil drain hole 25 in the flywheel 6. As shown in Fig. 3, the torque limiting mechanism 15, which is carried by the flywheel 6, comprises the radially inner annular portions 16c of the pair of driven disks 16 and a cone spring 17 installed between the annular portions 16c of these disks 16 and pressing the disks 16, 16 against the flywheel body 6a and the driven plate 6b. On the surfaces of the sides of the annular portions 16c of the driven disks 16 which contact the flywheel body 6a and the driven plate 6b are provided with linings 16a of abrasive material which constitute elements of the torque limiting mechanism 15. An excessive torque can be cut by a slippage between the linings 16a and the flywheel body 6a and the driven plate 6b. The thrust force of the driven disk 16 against the flywheel body 6a and the driven plate 6b depends upon the cone spring 17. When the torque is less than the frictional force which depends on this thrust force, the driven disk 16 and the flywheel 6 rotate together. When the torque exceeds the frictional force, a relative slippage takes place between the driven disk 16 and the flywheel 6, thereby releasing the portion of torque in excess of the frictional force. The characteristic D in Fig. 5 indicates the state that the torque in excess of the frictional force is released during such transmission.

The hysteresis mechanism 18 is located further radially inside the torque limiting mechanism 15 and between the driving plate 2 and the flywheel 6. Figure 4 illustrates the hysteresis mechanism 18. As seen from Fig. 4, in the hysteresis mechanism 18, a hysteresis plate 19 provided with a lining 19a of abrasive material is partially bent and a bent portion 19b is fitted into a hole 22 bored in the side plate 2c of the driving plate 2, thereby fixing circumferentially the hysteresis plate 19 to the driving plate 2. A cone spring 20 is installed between the hysteresis plate 19 and the side plate 2c, thereby pressing the lining 19a of the hysteresis plate 19 against the flywheel 6. The sliding friction between the lining 19a and the flywheel 6 produces a hysteresis as illustrated in Fig. 5.

Next, operation of the above-mentioned device of the present invention will be described referring to Figs. 5 and 6. The rotational torque of the driving shaft 1 is transmitted to the driving plate 2 which rotates together with the driving shaft 1, and then to the flywheel 6 via the spring mechanism 12 and the hysteresis mechanism 18. When the torque becomes excessively large, the torque limiting mechanism 15 slips to release the portion of torque in excess of the frictional force. Thereby a small variation of the torque of the driving shaft 1 and the engine vibration can be absorbed by the vibrational system which comprises the spring mechanism 12, the hysteresis mechanism 18 and the inertia members, i. e., the driving plate 2 and the flywheel 6.

As illustrated in the characteristics A, B, C and D of Fig. 5, for the purpose of effectively absorbing the variation of torque in an idling state of an engine, a soft spring characteristic is required when the relative rotational displacement between the driving plate 2 and the flywheel 6 is small and a hard spring characteristic is required for the purpose of making the spring mechanism 12 compact when the relative rotational displacement is large. Further, when a torque larger than required acts, it is necessary for the purpose of protecting the power train to limit the torque and transmit it to the clutch.

For these purposes, when the torque is small, the gap between the spring seat 14 and the driven disk 16 and the low frictional force of the hysteresis mechanism 18 effectively act to produce the characteristic A. Next, when the spring seat 14 and the driven disk 16 come into contact, the spring 14 deforms under an increased torque, producing the characteristic B. When with a further increase of the torque the spring 13 deforms more largely to cause two deformable portions 14a of the spring seats 14 to contact each other, the deformable portions 14a themselves deform under the increased torque, producing the characteristic C. When the torque increases and exceeds a specified torque, a slip develops between the torque limiting mechanism 15 and the flywheel 6, thereby releasing an excess of the torque and producing the characteristic D. In this way, the torque can be transmitted to the power train with its variations effectively absorbed.

For the purpose of providing such a torque variation absorbing device in a limited space of an automobile, it is required to make the device compact. Since the torque limiting mechanism 15 is located radially inside of the spring mechanism 12 in the device and there is no necessity to provide a space for housing the torque limiting mechanism 15 in the outer body 2a, the inertial mass of the driving plate 2 is increased and the size of torque variation absorbing device can be made smaller than that of the conventional device of Fig. 7. The radially inner surface of the outer body 2a is an integral cylindrical surface and the contact area between the spring mechanism 12 and the outer body 2a is increased in comparison with the contact area between the spring mechanism 103 and the torque limiting mechanism 104 of the device of Fig. 7. As a result, an abrasional damage of the coil spring 13 and a thermal distortion of the spring seats 14 due to a too local abrasion are unlikely to occur. On account of the location of the torque limiting mechanism 15 radially inside the spring mechanism 12, dusts produced from the torque limiting mechanism 15 when it slips can escape toward the radially outside space where the spring mechanism 12 is provided and, as a result, operation of the torque limiting mechanism 15 is not deteriorated.

Further, since the side plates 2c and 2d are constructed of steel and such a steel plate is more reliable in strength than a casting, the side plates 2c and 2d can be constructed thinner than corresponding portions of a driving plate machined from a casting. This thinner designing makes it possible to reduce the axial dimension of the driving plate 2 as compared with the case of a plate machined from a casting and makes the size of the device further compact. The rim 2c′ of the opening 26 of the side plate 2c is bent outwardly in the axial direction by press-working or the like and the spring mechanism 12 can be housed in the opening 26 of the side plate 2c and the recess 27 of the side plate 27 even though the thickness of the driving plate 2 is reduced. Thus, the driving plate 2 can be successfully reduced in thickness. The bending of the periphery 2c′ is possible, because the side plate 2c is fabricated of steel.

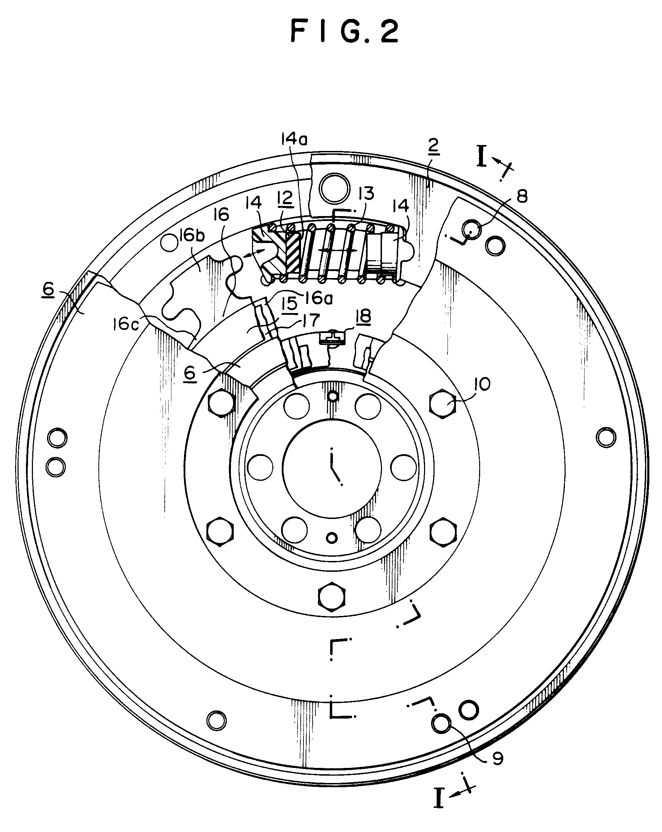

To produce these characteristics consistently, no invasion of an oil or grease splashing from the clutch spline mechanism into the slidable portions of the device, particularly into the torque limiting mechanism 15 or the hysteresis mechanism 18 can be tolerated, because a splashing of the sliding friction surface of, say, the torque limiting mechanism 15 with an oil or grease will result in a reduction of the frictional coefficient, a change of the characteristics of Fig. 5 and an eventually development of slip. In the prior device with the oil drain hole 105 located at a position illustrated in Fig. 7, the oil or grease flowing through the hole was likely to invade the torque limiting mechanism, while in the device of the present invention illustrated in Figs. 1 to 4, with the torque limiting mechanism 15 and the hysteresis mechanism 18 located inside of the hole 25, the oil which passes through the hole 25 and flows toward the spring mechanism 12 can go to the outside through the gap between the driving plate 2 and the flywheel 6 without touching the torque limiting mechanism 15 and the hysteresis mechanism 18. Thus the slidable parts of the torque limiting mechanism 15 and the hysteresis mechanism 18 are protected from the invasion of oil or grease, and accordingly, the characteristics of Fig. 5 will not be affected.

Also, to maintain the stability of these characteristics, no invasion of foreign substances into the torque variation absorbing device, particularly into the spring mechanism 12 or the torque limiting mechanism 15 is tolerated, because an invasion of foreign substance into the sliding friction surface of the torque limiting mechanism 15, for example, will change the frictional coefficient and affect the characteristics of Fig. 5. In the conventional device of Fig. 7, in which the spring mechanism 103 and the torque limiting mechanism 104 are open outwardly through the gap extending outwardly in the radial direction between the driving plate 101 and the flywheel 102, foreign substances can invade through the gap 109. In the device of the present invention shown in Figs. 1 to 4, the gap 11 between the driving plate 2 and the flywheel 6 is covered with a cylindrical projection 2d′ formed at the periphery of the side plate 2d of the driving plate 2, thereby preventing foreign substances from invading through the gap 11. Thus, the characteristics of Fig. 5 are stabilized and durability is enhanced.

In the above device, the load is supported at the load supporting points 23, 24 and the variable load of bending moment is imposed on the side plate 2c when the torque variation absorbing device is tilted with respect to the driving shaft 1. If the load supporting points 23 and 24 were radially aligned, the amplitude of the variable stress developed in the side plate 2c would be, as indicated by a two-dot chain line in Fig. 6, the sum of the bending stresses σa and σb developed at the load supporting points 23 and 24. In the case of the device according to the present invention, in which the load supporting points 23 and 24 are staggered or spaced from each other in the radial direction, the amplitude of the variable stress developed in the side plate 2c, as indicated in Fig. 6, will be the sum of the bending stress σa developed at one supporting point and the bending stress σb′ developed at the one point due to the bending stress σb at the other load supporting point. Since σb′ is smaller than σb, the amplitude of the variable stress ( σa + σb′) will be small. As a result, with the strength against the variable and repeated load increased, the structural reliability will be enhanced.

As evident from the above description, the present invention in which the torque limiting mechanism 15 is located radially inside the spring mechanism 12 brings about such benefits that the device can be made compact, the spring mechanism 12 is unlikely to suffer from an abrasional damage of the coil spring and a thermal distortion of the spring seats, and the torque limiting mechanism 15 can exhibit a stable performance without being affected by dusts produced when the mechanism 15 slips. Location of the torque limiting mechanism 15 inside of the spring mechanism 12 is also effective in reducing the amount of slip for the same relative rotational angle which reduces the amount of dust produced in the mechanism 15 when it slips. In addition, location of the torque limiting mechanism 15 radially inside the spring mechanism 12 reduces the outer diameter of the cone spring 17 and the small outer diameter of the cone spring 17 for pushing the lining 16a contributes to a reduction in costs.

Further, since the side plates 2c and 2d of the driving plate 2 is constructed of steel, the driving plate 2 can be constructed thinner than a driving plate machined from a casting and, as a result, the device is made further compact.

Further, since the side plate 2d of the driving plate 2 is provided with a cylindrical projection 2d′ which surrounds the flywheel 6, invasion of foreign substances through the gap 11 between the driving plate 2 and the flywheel 6 into the spring mechanism 12 or the torque limiting mechanism 15 can be prevented and, as a result, deterioration of the torque limiting characteristics due to foreign substances can be avoided and the durability of the device is enhanced.

Furthermore, since the load supporting points 23 and 24 on both sides of the side plate 2c are radially staggered, reliability in strength and durability of the side plate 2c can be increased in spite of its reduced thickness.

## Claims

1. Torque variation absorbing device comprising
a driving plate (2) coupled to a driving shaft (1),
a flywheel (6) arranged coaxially with said driving plate (2) and rotatably supported via a bearing (7) on said driving plate (2),
a spring mechanism (12) operative to transfer torque between the driving plate (2) and the flywheel (6) via a torque limiting mechanism (15),
the torque limiting mechanism comprising at least one driven disk (16) **to be biased to thereby complete the** frictional engagement with the driving plate (2) or the flywheel (6) at a friction portion (16a, 16c) thereof,
and a hysteresis mechanism operative between the driving plate (2) and the flywheel (6) to establish hysteresis in the relative movements thereof,
characterized in that
the friction portion (16a, 16c) of the driven disk (16) is located radially inside of the spring mechanism (12),
and that the spring mechanism (12) is opposed by a surface portion of the driving plate (2) or the flywheel (6) and the surface portion is located radially outside of the spring mechanism.

2. Torque variation absorbing device according to claim 1, wherein the driving plate (2) comprises a pair of steel side plates (2c, 2d) and ring-shaped outer and inner bodies (2a, 2b), the outer body (2a) being clamped between the pair of steel side plates (2c, 2d), and the outer and inner bodies (2a, 2b) and the pair of steel side plates (2c, 2d) being integrally connected.

3. Torque variation absorbing device according to claim 1 or 2, wherein the flywheel (6) includes a flywheel body (6a) and a driven plate (6b) connected with the flywheel body (6a), the flywheel body (6a) and the driven plate (6b) together housing the torque limiting mechanism (15).

4. Torque variation absorbing device according to claim 3, wherein the torque limiting mechanism (15) comprises radially inner annular portions (16c) of a pair of driven disks (16) and wherein the biasing means comprises a cone spring (17) interposed between the driven disks (16) pressing the driven disks (16) against the flywheel body (6a) and the driven plate (6b).

5. Torque variation absorbing device according to one of the claims 1 to 4, wherein the spring mechanism (12) comprises:
a coil spring (13) extending in the circumferential direction of the driving plate (2) and the flywheel (6); and
spring seats (14) provided at opposite ends of the coil spring (13), the spring seats (14) including a deformable portion (14a) having a greater spring constant than that of the coil spring (13).

6. Torque variation absorbing device according to claim 5, wherein one of the spring seats (14) is opposed to a rim (2c') of an opening (26) and a rim of a slot (27) formed in the side plates (2c, 2d) of the driving plate (2), while another of the spring seats (14) is opposed to a projection (16b) which projects radially outward from the radially inner annular portion (16c) of the driven disk (16) of the torque limiting mechanism (15), and in the absence of torque, a gap exists between at least one of the spring seats (14) and the rims to which the one of the spring seats (14) is opposed.

7. Torque variation absorbing device according to one of the claims 4 to 6, wherein surfaces of the pair of driven disks (16) which contact the flywheel body (6a) and the driven plate (6b) are provided with linings (16a) of abrasive material.

8. Torque variation absorbing device according to one of the claims 2 to 7, wherein the hysteresis mechanism (18) includes a hysteresis plate (19) having a lining (19a) of abrasive material and a bent portion (19b), the bent portion (19b) being fitted into a hole (22) in one of the pair of side plates (2c) of the driving plate (2), and a cone spring (20) interposed between the hysteresis plate (19) and the one side plate (2c) pressing the lining (19a) of the hysteresis plate (19) against the flywheel (6).

9. Torque variation absorbing device according to one of the claims 2 to 8, wherein one of the steel side plates (2d) located closer to the flywheel (6) is provided with an axially extending annular projection (2d') surrounding the flywheel (6) and covering a gap (11) between the driving plate (2) and the flywheel (6).

10. Torque variation absorbing device according to claim 9, wherein said axially extending annular projection (2d') is a bend over portion of the one of the steel side plates (2d) closer to the flywheel (6).

11. Torque variation absorbing device according to one of the claims 2 to 10, wherein one of the steel side plates (2c) located on the driving shaft (1) side of the driving plate (2) has a load supporting point (23, 24) on each surface thereof, the loading supporting points (23, 24) being spaced from each other in the radial direction of the flywheel (6).

12. Torque variation absorbing device according to claim 11, wherein the two load supporting points (23, 24) are at the radially outside end portion of the driving shaft (1) and at the radially outside end portion of the inner body (2b) of the driving plate (2), respectively, and the end portion of the inner body (2b) of the driving plate (2) is located radially outside the end portion of the driving shaft (1).

## Patentansprüche

1. Torsionsschwankungen aufnehmende Vorrichtung mit:
einer an eine Antriebswelle (1) gekoppelten Antriebsplatte (2),
einem koaxial mit der Antriebsplatte (2) angeordneten und über ein Lager (7) drehbar auf der Antriebsplatte (2) gelagerten Schwungrad (6),
einem die Torsionskraftübertragung zwischen der Antriebsplatte (2) und dem Schwungrad (6) über einen torsionsbegrenzenden Mechanismus (15) bewirkenden Federmechanismus (12), wobei
der torsionsbegrenzende Mechanismus mindestens eine mitgenommene Scheibe (16) aufweist, um vorbelastet zu werden, um dadurch den Reibungseingriff an einem Reibungsabschnitt (16a, 16c) davon mit der Antriebsplatte (2) oder dem Schwungrad (6) zu vervollständigen,
und einen zwischen der Antriebsplatte (2) und dem Schwungrad (6) wirkenden Hysteresemechanismus, der bei deren Relativbewegungen Hysterese erbringt,
**dadurch gekennzeichnet**, **daß**
der Reibungsabschnitt (16a, 16c) der mitgenommenen Scheibe (16) radial innerhalb des Federmechanismus (12) gelegen ist,
und daß der Federmechanismus (12) einem Flächenabschnitt der Antriebsplatte (2) oder des Schwungrades (6) entgegengesetzt ist und der Flächenabschnitt radial außerhalb des Federmechanismus gelegen ist.

2. Torsionsschwankungen aufnehmende Vorrichtung gemäß Anspruch 1, **dadurch gekennzeichnet**, **daß** die Antriebsplatte (2) ein Paar von Stahlseitenplatten (2c, 2d) und ringförmige äußere und innere Teile (2a, 2b) aufweist, der äußere Teil (2a) zwischen dem Paar von Stahlseitenplatten (2c, 2d) festgeklemmt ist, und die äußeren und inneren Teile (2a, 2b) und das Paar von Stahlseitenplatten (2c, 2d) zu einer Einheit verbunden sind.

3. Torsionsschwankungen aufnehmende Vorrichtung gemäß Anspruch 1 oder 2, **dadurch gekennzeichnet**, **daß** das Schwungrad (6) einen Schwungradteil (6a) und eine mit dem Schwungradteil (6a) verbundene mitgenommene Platte (6b) enthält, und der Schwungradteil (6a) und die mitgenommene Platte (6b) zusammen in dem torsionsbegrenzenden Mechanismus (15) eingebaut sind.

4. Torsionsschwankungen aufnehmende Vorrichtung gemäß Anspruch 3, **dadurch gekennzeichnet**, **daß** der torsionsbegrenzende Mechanismus (15) radial innere ringförmige Abschnitte (16c) eines Paars von mitgenommenen Scheiben (16) aufweist und die die Vorlast aufbringende Einrichtung eine zwischen den mitgenommenen Scheiben (16) eingesetzte konische Feder (17) aufweist, die die mitgenommenen Scheiben (16) gegen das Schwungradteil (6a) und die mitgenommene Platte (6b) preßt.

5. Torsionsschwankungen aufnehmende Vorrichtung gemäß einem der Ansprüche 1 bis 4, **dadurch gekennzeichnet**, **daß** der Federmechanismus (12) aufweist:
eine Schraubenfeder (13), die sich in der Umfangsrichtung der Antriebsplatte (2) und des Schwungrades (6) erstreckt; und
Federsitze (14), die an entgegengesetzten Endabschnitten der Schraubenfeder (13) vorgesehen sind, wobei die Federsitze (14) einen verformbaren Abschnitt (14a) enthalten, der eine größere Federkonstante als die der Schraubenfeder (13) hat.

6. Torsionsschwankungen aufnehmende Vorrichtung gemäß Anspruch 5, **dadurch gekennzeichnet, daß** einer der Federsitze (14) einem nach außen umgebogenen Rand (2c') einer Öffnung (26) und einem nach außen umgebogener Rand eines in den Seitenplatten (2c, 2d) der Antriebsplatte (2) ausgebildeten Schlitzes (27) gegenüberliegt, während ein anderer der Federsitze (14) einem Vorsprung (16b) gegenüberliegt, der von dem radial inneren ringförmigen Abschnitt (16c) der mitgenommenen Scheibe (16) des torsionsbegrenzenden Mechanismus (15) aus radial nach außen vorsteht, und beim Fehlen von Torsionskraft ein Spalt zwischen mindestens einem der Federsitze (14) und den nach außen umgebogenen Rändern, denen der eine der Federsitze (14) gegenüberliegt, existiert.

7. Torsionsschwankungen aufnehmende Vorrichtung gemäß einem der Ansprüche 4 bis 6, **dadurch gekennzeichnet**, **daß** Flächen des Paars von mitgenommenen Scheiben (16), die das Schwungradteil (6a) und die mitgenommene Platte (6b) kontaktieren, mit Auskleidungen (16a) aus abschleifendem Material versehen sind.

8. Torsionsschwankungen aufnehmende Vorrichtung gemäß einem der Ansprüche 2 bis 7, **dadurch gekennzeichnet**, **daß** der Hysteresemechanismus (18) eine Hystereseplatte (19) mit einer Auskleidung (19a) aus abschleifendem Material und einen gebogenen Abschnitt (19b) enthält, der gebogene Abschnitt (19b) in eine Bohrung (22) in einer des Paars von Seitenplatten (2c) der Antriebsplatte (2) eingefügt ist, und eine konische Feder (20) zwischen der Hystereseplatte (19) und der einen Seitenplatte (2c) eingesetzt ist, die die Auskleidung (19a) der Hystereseplatte (19) gegen das Schwungrad (6) preßt.

9. Torsionsschwankungen aufnehmende Vorrichtung gemäß einem der Ansprüche 2 bis 8, **dadurch gekennzeichnet**, **daß** eine der Stahlseitenplatten (2d), die näher zu dem Schwungrad (6) gelegen ist, mit einem sich axial erstreckenden ringförmigen Vorsprung (2d') versehen ist, der das Schwungrad (6) umgibt und einen Spalt (11) zwischen der Antriebsplatte (2) und dem Schwungrad (6) abdeckt.

10. Torsionsschwankungen aufnehmende Vorrichtung gemäß Anspruch 9, **dadurch gekennzeichnet**, **daß** der sich axial erstreckende ringförmige Vorsprung (2d') ein umgebogener Abschnitt der einen der Stahlseitenplatten (2d) ist, die dem Schwungrad (6) näher ist.

11. Torsionsschwankungen aufnehmende Vorrichtung gemäß einem der Ansprüche 2 bis 10, **dadurch gekennzeichnet**, **daß** eine der Stahlseitenplatten (2c), die an der Antriebswelle (1) seitens der Antriebsplatte (2) gelegen ist, an jeweils jeder Fläche einen Lastauflagerpunkt (23, 24) hat, und die Lastauflagerpunkte (23, 24) in der Radialrichtung des Schwungrades (6) mit Zwischenraum voneinander angeordnet sind.

12. Torsionsschwankungen aufnehmende Vorrichtung gemäß Anspruch 11, **dadurch gekennzeichnet**, **daß** sich die zwei Lastauflagerpunkte (23, 24) an dem radial außerhalb verlaufenden Endabschnitt der Antriebswelle (1) bzw. an dem radial außerhalb verlaufenden Endabschnitt des inneren Teils (2b) der Antriebsplatte (2) befinden, und der Endabschnitt des inneren Teils (2b) der Antriebsplatte (2) radial außerhalb des Endabschnitts der Antriebswelle (1) gelegen ist.

## Revendications

1. Dispositif d'amortissement des variations de couple comprenant:
un plateau d'entrainement (2) relié à un arbre d'entraînement (1),
un volant (6) disposé coaxialement par rapport audit plateau d'entraînement 2 et prenant appui de façon rotative sur un roulement (7) se trouvant sur ledit plateau d'entraînement (2),
un mécanisme à ressort (12) ayant pour fonction de transférer un couple entre le plateau d'entraînement (2) et le volant (6) par l'intermédiaire d'un mécanisme de limitation du couple (15),
le mécanisme de limitation du couple comprenant au moins un disque entraîné (16) destiné à être sollicité pour venir s'engager totalement par frottement sur le plateau d'entraînement (2) ou le volant (10) dans une partie de frottement (16a, 16c) de celui-ci,
et un mécanisme à hystérésis agissant entre le plateau d'entraînement (2) et le volant (6) pour établir une hystérésis dans leurs mouvements relatifs,
caractérisé en ce que:
la partie de frottement (16a, 16c) du disque entraîné (16) est située radialement à l'intérieur du mécanisme à ressort (12),
et en ce que le mécanisme à ressort (12) est opposé à une partie de la surface du plateau d'entraînement (2) ou du volant (6) et que cette partie de surface est située radialement à l'extérieur du mécanisme à ressort.

2. Dispositif d'amortissement des variations de couple selon la revendication 1, selon lequel le plateau d'entraînement (2) comprend un paire des plateaux latéraux (2c, 2d) et des corps extérieur et intérieur annulaires (2a, 2d), le corps extérieur (2a) étant enserré entre la paire de plateaux latéraux d'acier (2c, 2d), et les corps extérieur et intérieur (2a, 2b) et la paire de plateaux latéraux d'acier (2c, 2d) étant reliés solidaires les uns des autres.

3. Dispositif d'amortissement des variations de couple selon la revendication 1 ou 2, dans lequel le volant (6) comporte un corps de volant (6a) et un plateau entraîné (6b) relié au corps de volant (6a), le corps de volant (6a) et le plateau entraîné (6b) abritant ensemble le mécanisme de limitation du couple (15).

4. Dispositif d'amortissement des variations de couple selon la revendication 3, dans lequel le mécanisme de limitation du couple (15) comprend des parties annulaires radialement intérieures (16c) d'une paire de disques entraînés (16) et dans lequel le moyen à force de ressort comprend un ressort conique (17) interposé entre les disques entraînés (16) comprimant les disques entraînés (16) contre le corps de volant (6a) et le plateau entraîné (6b).

5. Dispositif d'amortissement des variations de couple selon l'une quelconque des revendications 1 à 4, dans lequel le mécanisme à ressort (12) comprend:
un ressort à boudin (13) s'étendant dans la direction circonférentielle du plateau d'entraînement (2) et du volant (6); et
des sièges de ressort (14) disposés aux extrémités opposées du ressort à boudin (13), les sièges de ressort (14) comportant une partie déformable (14a) ayant une constante de rappel supérieure à celle du ressort à boudin (13);

6. Dispositif d'amortissement des variations de couple selon la revendication 5, dans lequel l'un des sièges à ressort (14) est opposé à un ressort (2c') d'une ouverture (26) et à un rebord d'une fente (27) formée dans les plateaux latéraux (2c, 2d) du plateau d'entraînement (2), alors qu'un autre des sièges de ressort (14) est opposé à une protubérance (16b) qui fait saillie radialement vers l'extérieur de la partie annulaire radialement intérieure (16c) du disque entraîné (16) du mécanisme de limitation du couple (15), et caractérisé en ce qu'en l'absence de couple, un interstice existe entre au moins l'un des sièges de ressort (14) et les rebords auxquels est opposé l'un des sièges de ressort (14).

7. Dispositif d'amortissement des variations de couple selon l'une des revendications 4 à 6, dans lequel des surfaces de la paire de disques entraînés (16) qui sont en contact avec le corps de volant (6a) et le plateau entraîné (6b) sont pourvus de garnitures (16a) en matériau abrasif.

8. Dispositif d'amortissement des variations de couple selon l'une des revendications 2 à 7, dans lequel le mécanisme à hystérésis (18) comporte un plateau à hystérésis (19) ayant une garniture (19a) en matériau abrasif et une partie repliée (19b), la partie repliée (19b) étant ajustée dans un trou (22) ménagé dans l'une de la paire de plateaux latéraux (2c) du plateau d'entraînement (2), et un ressort conique (20) interposé entre le plateau à hystérésis (19) et le plateau latéral (2c), en comprimant la garniture (19a) du plateau à hystérésis (19) contre le volant (6).

9. Dispositif d'amortissement des variations de couple selon l'une des revendications 2 à 8, dans lequel l'une des plateaux latéraux d'acier (2d) située plus près du volant (6) est muni d'une protubérance annulaire s'étendant axialement (2d') entourant le volant (6) et recouvrant un interstice (11) formé entre le plateau d'entraînement (2) et le volant (6).

10. Dispositif d'amortissement des variations de couple selon la revendication 9, dans lequel ladite protubérance annulaire s'étendant axialement (2d') est un repli formé au-dessus d'une partie de l'une des plateaux latéraux d'acier (2d) situé plus près du volant (6).

11. Dispositif d'amortissement des variations de couple selon l'une des revendications 2 à 10, dans lequel l'une des plateaux latéraux d'acier (2c) situé du côté de l'arbre d'entraînement (1) du plateau d'entraînement (2) présente un point de support de charge (23, 24) sur chacune de ses surfaces, les points de support de charge (23, 24) étant espacés l'un de l'autre dans la direction radiale du volant (6).

12. Dispositif d'amortissement des variations de couple selon la revendication 11, dans lequel les deux points de support de charge (23, 24) se situent respectivement dans la partie d'extrémité radialement extérieure de l'arbre d'entraînement (1) et sur la partie d'extrémité radialement extérieure du corps intérieur (2b) du plateau d'entraînement (2), et en ce que la partie d'extrémité du corps intérieur (2b) du plateau d'entraînement (2) est située radialement vers l'extérieur de l'extrémité de l'arbre d'entraînement (1).
